(19) Europäisches Patentamt / European Patent Office / Office européen des brevets

(11) **EP 3 544 026 B1**

(12) # EUROPEAN PATENT SPECIFICATION

(45) Date of publication and mention
of the grant of the patent:
**18.10.2023 Bulletin 2023/42**

(21) Application number: **17871979.5**

(22) Date of filing: **01.11.2017**

(51) International Patent Classification (IPC):
**C08L 23/14** (2006.01)   **H01B 3/44** (2006.01)
**H01B 3/30** (2006.01)   **H01B 7/02** (2006.01)
**H01B 7/17** (2006.01)   **H01B 9/02** (2006.01)

(52) Cooperative Patent Classification (CPC):
(C-Sets available)
**H01B 3/441; C08L 23/14; H01B 3/30; H01B 7/02;**
**H01B 7/17; H01B 9/02;** C08L 2203/202;
C08L 2205/03; C08L 2205/24; C08L 2207/02

(Cont.)

(86) International application number:
**PCT/KR2017/012268**

(87) International publication number:
**WO 2018/093074 (24.05.2018 Gazette 2018/21)**

(54) **POWER CABLE**

STROMKABEL

CÂBLE D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2016 KR 20160154747**

(43) Date of publication of application:
**25.09.2019 Bulletin 2019/39**

(73) Proprietor: **LS Cable & System Ltd.
Anyang-si, Gyeonggi-do 14119 (KR)**

(72) Inventors:
• **LEE, Jae Ik**
**Seoul 06372 (KR)**
• **NAM, Jin Ho**
**Seoul 06097 (KR)**
• **RYU, Ik Hyun**
**Anyang-si
Gyeonggi-do 13924 (KR)**
• **SON, Sue Jin**
**Anyang-si
Gyeonggi-do 14109 (KR)**
• **KIM, Eun Ah**
**Suwon-si
Gyeonggi-do 16322 (KR)**

(74) Representative: **advotec.
Patent- und Rechtsanwaltspartnerschaft
Tappe mbB
Widenmayerstraße 4
80538 München (DE)**

(56) References cited:
EP-A1- 3 477 662   WO-A1-2014/126404
KR-A- 20090 032 146   KR-A- 20120 061 980
KR-A- 20140 134 836   KR-A- 20160 033 245
KR-A- 20160 075 547   US-A1- 2016 122 471

• "A Basic Guide to Particle Characterization",
Malvern Instruments Worldwide - White Paper, 2
May 2012 (2012-05-02), pages 1-26, XP055089322,
Retrieved from the Internet:
URL:http://golik.co.il/Data/ABasicGuidtoPa
rticleCharacterization(2)_1962085150.pdf

(52) Cooperative Patent Classification (CPC): (Cont.)

C-Sets
**C08L 23/14, C08L 23/12, C08L 23/16**

C-Sets
**C08L 23/14, C08L 23/12, C08L 23/16**

**Description**

TECHNICAL FIELD

The present invention relates to a power cable. More particularly, the present invention relates to a power cable including an insulating layer formed of an insulating material which is eco-friendly and which has high heat resistance and mechanical strength while exhibiting cold resistance, high flexibility, bendability, impact resistance, installability, workability, etc. which are in a tradeoff relationship with heat resistance and mechanical strength.

BACKGROUND ART

Generally, a power cable includes a conductor and an insulating layer covering the conductor, and may further include an inner semiconducting layer between the conductor and the insulating layer, an outer semiconducting layer covering the insulating layer, and a sheath layer covering the outer semiconducting layer.

In recent years, the development of high-capacity cables has been required due to the increasing demand for electric power. To this end, an insulating material is needed to form an insulating layer having excellent mechanical and electrical characteristics.

Conventionally, a polyolefin-based polymer, such as polyethylene, an ethylene/propylene elastomeric copolymer (EPR), or an ethylene/propylene/diene copolymer (EPDM), is generally cross-linked and used as a base resin constituting the insulating material. This is because the conventional cross-linked resin maintains high flexibility, satisfactory electrical and mechanical strength, etc. even at high temperatures.

However, the cross-linked polyethylene (XLPE) or the like used as the base resin of the insulating material is in a cross-linked form and thus is not eco-friendly, because it is not recyclable and should be discarded by incineration when the lifespan of a cable having an insulating layer formed of the XLPE or the like comes to an end.

When used as a material of the sheath layer, polyvinyl chloride (PVC) is difficult to separate from the XLPE of the insulating material and is not eco-friendly because it produces toxic chlorinated materials during incineration.

In contrast, non-cross-linked high-density polyethylene (HDPE) or low-density polyethylene (LDPE) is eco-friendly because it is recyclable when the lifespan of a cable having an insulating layer formed thereof comes to an end, but is inferior to XLPE in terms of heat resistance. Thus, the non-cross-linked HDPE or the LDPE is only limited to certain purposes due to low operating temperatures thereof.

Thus, a polypropylene resin which is an eco-friendly polymer having a melting point of 160 °C or higher and having high heat resistance even when not cross-linked may be used as a base resin. However, the polypropylene resin has insufficient cold resistance, bendability and flexibility due to high rigidity thereof, and thus, the workability of installation of a cable having an insulating layer formed thereof is low and polypropylene resin is only limited to certain purposes.

Accordingly, a power cable which is eco-friendly, is inexpensive to manufacture, has high heat resistance and mechanical strength, and satisfies all cold resistance, flexibility, bendability, impact resistance, installability, workability, etc. which are in a tradeoff relationship with heat resistance and mechanical strength is in desperate need.

KR 2014/0134836 A, according to its abstract, relates to a power cable which has eco-friendly properties, heat resistance and excellent mechanical strength and has an insulating layer which is made of an excellent insulating material which has flexibility, shock resistance, cold resistance, pulling characteristic, workability, etc to trade-off their properties.

EP 3 477 662 A1, according to its abstract, relates to a power cable including an insulating layer formed of an insulating material which is eco-friendly and which has high heat resistance and mechanical strength while exhibiting high flexibility, bendability, impact resistance, cold resistance, installation property, workability, etc. which are in a tradeoff relationship with the heat resistance and the mechanical strength.

WO 2014/126404A1, according to its abstract, relates to a power cable having a semi-conductive layer, which can be reused and is thus environment-friendly, has excellent heat resistance and mechanical strength, and is excellent in flexibility, bendability, impact resistance, cold resistance, spreading property, construction property, and workability, which are in a trade-off relation with the properties of heat resistance and mechanical strength.

DETAILED DESCRIPTION OF THE INVENTION

TECHNICAL PROBLEM

The present invention is directed to an eco-friendly power cable.

The present invention is also directed to a power cable satisfying all heat resistance and mechanical strength, and cold resistance, flexibility, bendability, impact resistance, installability, workability, etc. which are in a tradeoff relationship with heat resistance and mechanical strength.

TECHNICAL SOLUTION

According to an aspect of the present invention, there is a power cable comprising according to independent claim 1.

According to another embodiment of the present invention, there is the power cable, wherein, when a sample having a thickness of 1 mm, manufactured by pressurizing the bases resin, which is preheated at 180 °C for ten minutes, at 20 MPa for ten minutes and cooling the base resin, is stretched at a speed of 200 mm/min, a modulus of elasticity of a point on the sample at which elongation is 5% is in a range of 7 to 25 kgf/mm$^2$ and Shore D hardness thereof is in a range of 50 to 70.

According to the present invention, there is the power cable, wherein the content of the polypropylene resin A is 30 to 60 parts by weight and the content of the heterophasic resin B is 40 to 70 parts by weight, based on 100 parts by weight of the base resin.

According to another embodiment of the present invention, there is the power cable, wherein the polypropylene resin A satisfies all the following conditions a) to i):

a) a density of 0.87 to 0.92 g/cm$^3$, measured according to ISO 11883;
b) a melting flow rate (MFR) of 1.7 to 1.9 g/10 min, measured at 230 °C and under a load of 2.16 kg, according to ISO 1133;
c) a tensile modulus of 930 to 980 MPa, measured at a tensile rate of 1 mm/min;
d) a tensile stress at yield of 22 to 27 MPa, measured at a tensile rate of 50 mm/min;
e) a tensile strain at yield of 13 to 15%, measured at a tensile rate of 50 mm/min;
f) Charpy impact strength of 1.8 to 2.1 kJ/m$^2$ at 0 °C and 5.5 to 6.5 kJ/m$^2$ at 23 °C;
g) a heat distortion temperature of 68 to 72 °C, measured at 0.45 MPa;
h) a Vicat softening point of 131 to 136 °C, measured at 50 °C/h and 10 N according to the A50 standard; and
i) Shore D hardness of 63 to 70, measured according to ISO 868.

According to another embodiment of the present invention, there is the power cable, wherein the heterophasic resin B satisfies all the following conditions a) to j) :

a) a density of 0.86 to 0.90 g/cm$^3$, measured according to ISO 11883;

b) a melting flow rate (MFR) of 0.1 to 1.0 g/10 min, measured under a load of 2.16 kg and at 230 °C according to ISO 1133;

c) a tensile stress at break of 10 MPa or more, measured at a tensile rate of 50 mm/min;

d) a tensile strain at break of 13 to 15%, measured at a tensile rate of 50 mm/min;

e) bending strength of 95 to 105 MPa;

f) notched izod impact strength of 68 to 72 kJ/m$^2$ at -40 °C;

g) a heat distortion temperature of 38 to 42 °C, measured at 0.45 MPa;

h) a Vicat softening point of 55 to 59 °C, measured at 50 °C/h and 10 N according to the standard A50;

i) Shore D hardness of 25 to 31, measured according to ISO 868; and

j) a melting point of 155 to 170 °C.

According to another embodiment of the present invention, there is the power cable, wherein the polypropylene resin A comprises a random propylene-ethylene copolymer containing an ethylene monomer in an amount of 1 to 5% by weight, based on a total weight of monomers, and the polypropylene matrix contained in the heterophasic resin B comprises a propylene homopolymer.

According to another aspect of the present invention, there is the power cable, wherein the propylene copolymer contained in the heterophasic resin B comprises propylene-ethylene rubber (PER) particles containing an ethylene monomer in an amount of 20 to 50% by weight, based on a total weight of monomers, the PER particles having a particle size of 1 μm or less.

According to another embodiment of the present invention, there is the power cable, wherein the content of the propylene copolymer is 60 to 80 % by weight, based on a total weight of the heterophasic resin B.

According to another embodiment of the present invention, there is the power cable, wherein the heterophasic resin B has a melting enthalpy of 25 to 40 J/g, measured by a differential scanning calorimeter (DSC).

According to another embodiment of the present invention, there is the power cable, wherein the insulating layer further comprises a nucleating agent in an amount of 0.1 to 0.5 parts by weight, based on 100 parts by weight of the base resin, and the polypropylene resin A has a particle size of 1 to 10 $\mu$m.

According to another embodiment of the present invention, there is the power cable, wherein the insulating layer further comprises an insulating oil in an amount of 1 to 10 parts by weight, based on 100 parts by weight of the non-cross-linked thermoplastic polymer.

According to another embodiment of the present invention, there is the power cable, wherein the insulating layer further comprises at least one additive in an amount of 0.001 to 10% by weight, based on a total weight of the insulating layer, the at least one additive being selected from the group of an antioxidant, a buffering agent, a heat stabilizer, a nucleating agent, and acid scavengers.

According to another embodiment of the present invention, there is the power cable, wherein the non-cross-linked thermoplastic polymer has a melting point of 150 to 160 °C, measured by a differential scanning calorimeter (DSC), and a melting enthalpy of 30 to 80 J/g, measured by the DSC.

ADVANTAGEOUS EFFECTS

A power cable according to the present invention employs a non-cross-linked polypropylene polymer as a material of an insulating layer and thus is eco-friendly and exhibits heat resistance and mechanical strength.

Furthermore, although in the power cable according to the present invention, an insulating layer formed of a propylene polymer having high rigidity is applied, all cold resistance, flexibility, bendability, impact resistance, installability, workability, etc. can be satisfied by precisely controlling a material of the insulating layer and a brittleness temperature thereof.

DESCRIPTION OF THE DRAWINGS

FIG. 1 is a schematic view of a transverse section of a power cable according to an embodiment of the present invention.
FIG. 2 is a schematic view of a stepwise longitudinal section of the power cable of FIG. 1.

MODE OF THE INVENTION

Hereinafter, exemplary embodiments of the present invention will be described in detail. The present invention is, however, not limited thereto and may be embodied in many different forms. Rather, the embodiments set forth herein are provided so that this disclosure will be thorough and complete, and fully convey the scope of the invention to those of ordinary skilled in the art. Throughout the disclosure, the same reference numbers represent the same elements.

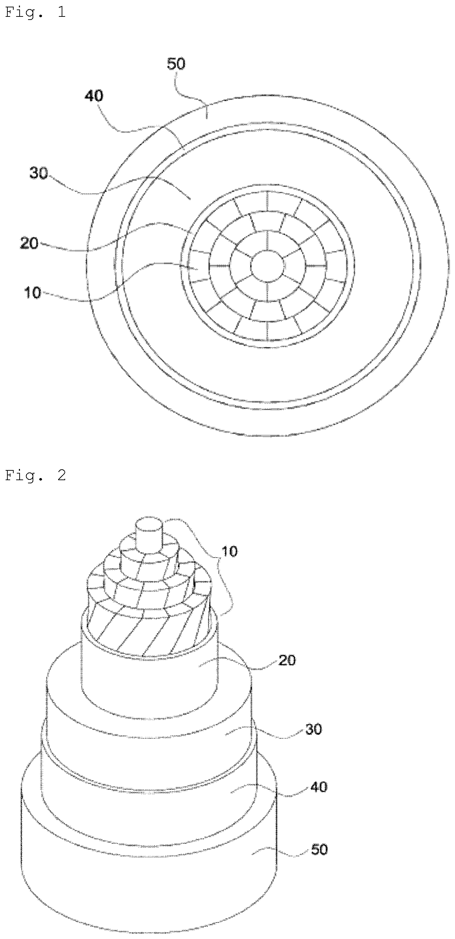

FIGS. 1 and 2 illustrate a transverse section and a stepwise longitudinal section of a power cable according to an embodiment of the present invention.

As illustrated in FIGS. 1 and 2, the power cable according to the present invention includes a conductor 10 formed of a conductive material such as copper or aluminum, an insulating layer 30 formed of an insulating polymer or the like, an inner semiconducting layer 20 covering the conductor 10, removing an air layer between the conductor 10 and the insulating layer 30, and reducing local electric field concentration, an outer semiconducting layer 40 shielding the cable and allowing a uniform electric field to be applied to the insulating layer 30, a sheath layer 50 protecting the cable, etc.

The dimensions of the conductor 10, the insulating layer 30, the semiconducting layers 20 and 40, the sheath layer 50, etc. may vary according to use of the cable, a transmission voltage, etc.

The conductor 10 may be formed by twisting a plurality of wires to improve the cold resistance, flexibility, bendability, installability, workability, etc. of the cable, and particularly includes a plurality of conductor layers formed by arranging a plurality of wires in a circumferential direction of the conductor 10.

The insulating layer 30 of the power cable according to the present invention may include, as a base resin, a non-cross-linked thermoplastic resin, in which a polypropylene resin A and a heterophasic resin B in which a propylene copolymer is dispersed in a polypropylene matrix are blended.

The polypropylene resin A comprises random propylene-ethylene copolymer containing an ethylene monomer in an amount of 1 to 10% by weight. This is because when propylene and ethylene are copolymerized, a hard and flexible property is exhibited. The randompropylene copolymer refers to a propylene copolymer formed by randomly and alternately arranging a propylene monomer and another olefin monomer. The random propylene copolymer is a randompropylene copolymer with an ethylene monomer contained in an amount of 1 to 10% by weight, preferably, 1 to 5% by weight, and more preferably, 3 to 4% by weight, based on the total weight of the monomers.

The random propylene copolymer preferably has a density of 0.87 to 0.92 g/cm$^3$ (measured according to ISO 11883), a melting flow rate (MFR) of 1.7 to 1.9 g/10 min (measured under a load of 2.16 kg at 230 °C according to ISO 1133), a tensile modulus of 930 to 980 MPa (measured at a tensile rate of 1 mm/min), a tensile stress of 22 to 27 MPa (measured at a tensile rate of 50 mm/min), a tensile strain of 13 to 15% (measured at a tensile rate of 50 mm/min), a Charpy impact strength of 1.8 to 2.1 kJ/m$^2$ at 0 °C and 5.5 to 6.5 kJ/m$^2$ at 23 °C, a thermal deformation temperature of 68 to 72 °C (measured at 0.45 MPa), a Vicat softening point of 131 to 136 °C (measured at 50 °C/h and 10 N according to the standard A50), and Shore D hardness of 63 to 70 (measured according to ISO 868).

The random propylene copolymer may improve the mechanical strength, e.g., the tensile strength, of the insulating layer 30 to be formed, is suitable for a transparent molded product due to high transparency thereof, has a relatively high crystallization temperature Tc and thus may shorten a cooling time after the extrusion of the insulating layer 30 to manufacture the cable, thereby improving the yield of the cable and minimizing the shrinkage and thermal deformability of the insulating layer 30, and is relatively cheap and thus reduces manufacturing costs of the cable.

The polypropylene resin A may have a weight-average molecular weight (Mw) of 200,000 to 450,000. Furthermore, the polypropylene resin A may have a melting point Tm of 140 to 175 °C (measured by a differential scanning calorimeter (DSC) a melting enthalpy of 50 to 100 J/g (measured by the DSC), and bending strength of 30 to 1,000 MPa, and preferably, 60 to 1,000 MPa at room temperature (measured according to ASTM D790) .

The polypropylene resin A may be polymerized under a general stereospecific Ziegler-Natta catalyst, a metallocene catalyst, a constraining geometry catalyst, other organometallic or coordination catalysts, and preferably, under the Ziegler-Natta catalyst or the metallocene catalyst. Here, the metallocene is a generic name of a bis(cyclopentadienyl) metal which is a novel organometallic compound in which cyclopentadiene and a transition metal are bonded in a sandwich structure. A general formula of a simplest structure thereof is $M(C_5H_5)_2$ (here, M represents Ti, V, Cr, Fe, Co, Ni, Ru, Zr, Hf, or the like) . Polypropylene polymerized under the metallocene catalyst has a low residual catalyst amount of about 200 to 700 ppm and thus the deterioration of the electrical characteristics of an insulating composition containing polypropylene may be suppressed or minimized due to the low residual catalyst amount.

Although the polypropylene resin A is in the non-cross-linked form, the polypropylene resin A exhibits sufficient heat resistance due to a high melting point thereof and thus a power cable having an improved continuous operating temperature may be provided. Furthermore, the polypropylene resin A is recyclable due to the non-cross-linked form and thus is eco-friendly. In contrast, a conventional cross-linked resin is difficult to recycle and thus is not eco-friendly, and may cause deterioration of long-term extrudability, resulting in non-uniform productivity, when crosslinking or scorch occurs early during the formation of the insulating layer 30.

In the heterophasic resin B in which the propylene copolymer is dispersed in the polypropylene matrix, the polypropylene matrix includes a propylene homopolymer.

In the heterophasic resin B, the propylene copolymer dispersed in the polypropylene matrix (hereinafter referred to as 'dispersed propylene copolymer') is substantially amorphous. Here, the amorphous propylene copolymer refers to a propylene copolymer having a residual crystallinity with a melting enthalpy of less than 10 J/g. The dispersed propylene copolymer may include at least one commoner selected from a group consisting of ethylene and a $C_{4-8}$ $\alpha$-olefin group like 1-butene, 1-pentene, 4-methyl-1-pentene, 1-hexene, 1-heptene, 1-octene, etc.

The content of the dispersed propylene copolymer may be 60 to 90% by weight, and preferably, 65 to 80% by weight, based on the total weight of the heterophasic resin B. Here, the flexibility, bendability, impact resistance, cold resistance, etc. of the insulating layer 30 formed when the content of the dispersed propylene copolymer is less than 60% by weight may be insufficient, whereas the heat resistance, mechanical strength, etc. of the insulating layer 30 formed when the content of the dispersed propylene copolymer is greater than 90% by weight may be insufficient.

The dispersed propylene copolymer may be propylene-ethylene rubber (PER) or propylene-ethylene diene rubber (EPDM) containing an ethylene monomer in an amount of 20 to 50% by weight, and preferably, 30 to 40% by weight, based on the total weight of the monomers. When the content of the ethylene monomer is less than 20% by weight, the flexibility, bendability, and impact resistance of the insulating layer 30 may be high but the cold resistance thereof may be insufficient. When the content of the ethylene monomer is greater than 50% by weight, the cold resistance, heat resistance, and mechanical strength of the insulating layer 30 may be high but the flexibility thereof may deteriorate.

In the present invention, the dispersed propylene copolymer may have a particle size of 1 $\mu$m or less, preferably, 0.9 $\mu$m or less, and more preferably, 0.8 $\mu$m or less. Due to the particle size of the dispersed propylene copolymer, uniform dispersion of the dispersed propylene copolymer in the polypropylene matrix may be ensured and the impact strength of the insulating layer 30 including the dispersed propylene copolymer may be improved. In addition, due to the particle size, the likelihood of stopping already formed cracks may be increased while reducing the risk of cracks caused by particles of the dispersed propylene copolymer.

The heterophasic resin B may have a melting flow rate (MFR) of 0.1 to 1.0 g/10 min, and preferably, 0.8 g/10 min, measured under a load of 2.16 kg and at 230 °C according to ISO 1133, a tensile stress at break of 10 MPa or more, a tensile strain at break of 490% or more, a bending strength of 95 to 105 MPa, a notched izod impact strength of 68 to 72 kJ/m$^2$, measured at -40 °C, thermal deformation temperature of 38 to 42 °C, measured at 0.45 MPa, a Vicat softening point of 55 to 59 °C, measured at 50 °C/h and 10 N according to A50, Shore D hardness of 25 to 31, measured according to ISO 868, a melting point Tm of 155 to 170 °C, measured by the DSC, and a melting enthalpy of 25 to 40 J/g, measured by the DSC.

The density of the heterophasic resin B may be 0.86 to 0.90 g/cm$^3$, and preferably, 0.88 g/cm$^3$, when measured according to ISO 11883. The characteristics, e.g., impact strength and a shrinkage property, of the insulating layer 30 are influenced by the density of the heterophasic resin B.

The heterophasic resin B contains non-cross-linked polypropylene and thus is recyclable and eco-friendly, may improve the heat resistance of the insulating layer 30 formed of the polypropylene matrix having high heat resistance, and may improve the cold resistance, flexibility, bending property, impact resistance, installability, workability, etc. of the insulating layer 30 which deteriorate due to the rigidity of the polypropylene resin A.

Because the insulating layer 30 includes the above-described base resin and brittleness temperature T$_b$ thereof defined by Equation 1 below is be controlled to be -55 to -35 °C, heat resistance and mechanical strength may be high, and cold resistance, flexibility, bendability, impact resistance, installability, workability, etc. which are in a tradeoff relation with heat resistance and mechanical strength may be high.

$$[\text{Equation 1}]$$

$$T_b = T_h + \Delta T [ (S/100) - (1/2) ]$$

In Equation 1 above, T$_h$ represents a temperature (°C) at which all five samples are destroyed or cracks observable with a naked eye occur on surfaces thereof, when a brittleness test (KS 3004) is performed on the five samples according to ASTM D746, i.e., when the five samples are left at each temperature for 2.5 to 3.5 minutes while reducing a temperature by 5 °C and are struck using a striking edge at a speed of 1800 to 2200 mm/s in a direction of an angle of 90 degrees, the samples being manufactured to a thickness of 2 mm by preheating a base resin, for forming an insulating layer, at 180 °C for ten minutes, pressurizing the base resin at 20 MPa for ten minutes, and cooling the base resin; $\Delta$T represents the amount of change of a temperature when the brittleness test is performed, i.e., 5 °C; and S represents the sum of percentages of samples destroyed at each temperature among all the samples.

Here, when the brittleness temperature T$_b$ is less than -55 °C, cold resistance is high but mechanical properties are insufficient, and thus, an original shape of a cable is difficult to maintain because a cable may be pressed down during manufacture or during storage, thereby greatly deteriorating electric characteristics of the cable. In contrast, when the brittleness temperature T$_b$ is greater than -35 °C, cold resistance may significantly deteriorate.

In particular, a weight ratio (A:B) between the polypropylene resin A and the heterophasic resin B may be in a range of 3:7 to 6:4, and preferably, 5:5. When the weight ratio is less than 3:7, the mechanical strength, e.g., tensile strength, of the insulating layer 30 may be insufficient. When the weight ratio is greater than 6:4, the flexibility, bendability, impact resistance, cold resistance, etc. of the insulating layer 30 may be insufficient.

Due to a combination of the polypropylene resin A exhibiting high heat resistance and mechanical strength and the heterophasic resin B exhibiting high heat resistance, flexibility, bendability, impact resistance, cold resistance, installability, workability, etc. and the compatibility thereof, the non-cross-linked thermoplastic resin contained in the insulating layer 30 of the power cable according to the present invention has an excellent effect of achieving all the above-described features which are in a tradeoff relationship with each other, i.e., heat resistance and mechanical strength and flexibility, bendability, impact resistance, cold resistance, installability, workability, etc.

Here, the non-cross-linked thermoplastic resin may have a melting point Tm of 150 to 160 °C (measured by the DSC) and a melting enthalpy of 30 to 80 J/g (measured by the DSC).

When the melting enthalpy of the non-cross-linked thermoplastic resin is less than 30 J/g, it means that the non-cross-linked thermoplastic resin has a small crystal size and low crystallinity and the heat resistance and mechanical strength of the cable are low. When the melting enthalpy exceeds 80 J/g, it means that the non-cross-linked thermoplastic resin has a large crystal size and high crystallinity and the electrical characteristics of the insulating layer 30 may deteriorate.

In the present invention, the insulating layer 30 may further include a nucleating agent, as well as the non-cross-linked thermoplastic resin. The nucleating agent may be a sorbitol-based nucleating agent. That is, the nucleating agent is a sorbitol-based nucleating agent, e.g., 1,3:2,4-bis(3,4-dimethyldibenzylidene) sorbitol, bis(p-methyldibenzylidene) sorbitol, substituted dibenzylidene sorbitol, or a mixture thereof.

The nucleating agent may accelerate the curing of the non-cross-linked thermoplastic resin, even when not quenched during a cable extrusion process, thereby improving the productivity of a cable, electrical characteristics of an insulating layer may be improved by limiting a size of crystals generated during the curing of the non-cross-linked thermoplastic resin to be small, and preferably, to be 1 to 10 $\mu$m, and crystallinity may be increased by forming a plurality of crystallization sites at which crystals are formed, thereby improving all the heat resistance, mechanical strength, etc. of the insulating layer.

Because the nucleating agent has a high melting temperature, injection and extrusion processing should be performed at a high temperature of about 230 °C and two or more sorbitol-based nucleating agents are preferably used in combination. When two or more different sorbitol-based nucleating agents are used in combination, the expression of the nucleating agents may be enhanced even at a low temperature.

The nucleating agent may be contained in an amount of 0.1 to 0.5 parts by weight, based on 100 parts by weight of the non-cross-linked thermoplastic resin. When the content of the nucleating agent is less than 0.1 part by weight, the heat resistance and electrical and mechanical strength of the non-cross-linked thermoplastic resin and the insulating layer containing the same may deteriorate due to a large crystal size, e.g., a crystal size greater than 10 $\mu$m, and a non-uniform distribution of crystals. In contrast, when the content of the nucleating agent is greater than 0.5 part by weight, a surface interface area between a crystal and an amorphous portion of the resin increases due to an extremely small crystal size, e.g., a crystal size of less than 1 $\mu$m, and thus, AC dielectric breakdown (ACBD) characteristics, impulse characteristics, etc. of the non-cross-linked thermoplastic resin and the insulating layer containing the same may deteriorate.

In the present invention, the insulating layer 30 may further include insulating oil.

The insulating oil may be mineral oil, synthetic oil, or the like. In particular, the insulating oil may be an aromatic oil including an aromatic hydrocarbon compound, such as dibenzyltoluene, alkylbenzene, or alkyldiphenylethane, a paraffinic oil including a paraffinic hydrocarbon compound, a naphthenic oil including a naphthenic hydrocarbon compound, silicon oil, or the like.

The content of the insulating oil may be 1 to 10 parts by weight, and preferably, 1 to 7.5 parts by weight, based on 100 parts by weight of the non-cross-linked thermoplastic resin. When the content of the insulating oil is greater than 10 parts by weight, the insulating oil may flow out during the extrusion process of forming the insulating layer 30 on the conductor 10, thus making it difficult to process the cable.

As described above, the insulating oil may additionally improve the flexibility, bendability, etc. of the insulating layer 30 formed of, as a base resin, a polypropylene resin having high rigidity and slightly low flexibility, thereby facilitating the installation of a cable, and at the same time exhibits an excellent effect of maintaining or improving the high heat resistance and mechanical and electrical characteristics of the polypropylene resin. In particular, the insulating oil exhibits an excellent effect of supplementing deterioration of processability due to a narrow molecular weight distribution when the polypropylene resin is polymerized under the metallocene catalyst.

In the present invention, the insulating layer 30 may further include other additives, such as an antioxidant, a buffering agent, a heat stabilizer, a nucleating agent, and acid scavengers. The other additives may be added in an amount of 0.001 to 10% by weight, based on the total weight of the insulating layer 30, according to the type thereof.

The inner semiconducting layer 20 may include, as a base resin, a blended resin of heterophasic resin B in which a propylene copolymer is dispersed in a polypropylene matrix and another heterophasic resin B'. Here, similarly, the heterophasic resin B' is a heterophasic resin in which a propylene copolymer is dispersed in a polypropylene matrix but the polypropylene matrix includes a propylene random copolymer. Thus, the heterophasic resin B' has a lower melting point and a higher melting flow rate (MFR) than those of the heterophasic resin B. For example, the melting point of the heterophasic resin B' may be 140 to 150 °C, and the higher melting flow rate (MFR) thereof measured under a load of 2.16 kg and at 230 °C according to ISO 1133 may be 6 and 8 g/10 min.

The content of the heterophasic resin B may be 50 to 80 parts by weight and the content of the heterophasic resin B' may be 20 to 50 parts by weight, based on 100 parts by weight of the base resin. Additionally, carbon black may be contained in an amount of 35 to 70 parts by weight, and an antioxidant may be contained in an amount of 0.2 to 3 parts by weight.

Here, when the content of the heterophasic resin B is less than 50 parts by weight and the content of the heterophasic resin B' is greater than 50 parts by weight, the heat resistance and elongation of the inner semiconducting layer 20 may significantly deteriorate. When the content of the heterophasic resin B is greater than 80 parts by weight and the content of the heterophasic resin B' is less than 20 parts by weight, the viscosity of the composition of the inner semiconducting layer 20 increases and thus a screw load may increase when extruded, thereby greatly reducing workability.

When the content of the carbon black is less than 35 parts by weight, the semiconducting property of the inner semiconducting layer 20 may not be realized, whereas when the content of the carbon black is greater than 70 parts by weight, the viscosity of the inner semiconducting layer 20 may increase and thus the screw load may increase when extruded, thereby greatly reducing workability.

When the content of the antioxidant is less than 0.2 parts by weight, it may be difficult to secure long-term heat resistance of the power cable in a high-temperature environment. In contrast, when the content of the antioxidant is greater than 3 parts by weight, a blooming phenomenon that the antioxidant flows out in white to a surface of the inner semiconducting layer 20 may occur and thus the semiconducting properties may deteriorate.

The outer semiconducting layer 40 may include, as a base resin, a blended resin of the heterophasic resin B and an ethylene copolymer resin. The ethylene copolymer resin may include, for example, ethylene butyl acrylate (EBA), ethylene vinyl acetate (EVA), ethylene ethyl acrylate (EEA), ethylene methyl acrylate (EMA), or a combination thereof.

Here, the content of the heterophasic resin B may be 10 to 40 parts by weight and the content of the ethylene copolymer resin may be 60 to 90 parts by weight, based on 100 parts by weight of the base resin, and additionally, carbon black may be contained in an amount of 35 to 70 parts by weight, and an antioxidant may be contained in an amount of 0.2 to 3 parts by weight.

Here, when the content of the heterophasic resin B is less than 10 parts by weight and the content of the ethylene copolymer resin is greater than 90 parts by weight, it may be difficult to secure the heat resistance of the power cable in a high-temperature environment and the adhesion of the outer semiconducting layer 40 to the insulating layer 30 may be greatly reduced. When the content of the heterophasic resin B is less than 40 parts by weight and the content of the ethylene copolymer resin is less than 60 parts by weight, the ease of peeling the outer semiconducting layer 40 from the insulating layer 30 may be greatly reduced.

When the content of the carbon black is less than 35 parts by weight, the semiconducting property of the outer semiconducting layer 40 may not be realized. When the content of the carbon black is greater than 70 parts by weight, the viscosity of the composition of the outer semiconducting layer 40 increases and thus the screw load increases when extruded, thereby greatly reducing workability.

When the content of the antioxidant is less than 0.2 parts by weight, the long-term heat resistance of the power cable may be difficult to secure in a high-temperature environment. When the content of the antioxidant is greater than 3 parts by weight, the blooming phenomenon that the antioxidant flows out in white to a surface of the inner semiconducting layer 20 may occur and thus the semiconducting properties may deteriorate.

[Examples]

1. Preparation Examples

Each of samples was prepared by preheating a base resin, for forming an insulating layer, the composition and content of which are shown in Table 1 below, at 180 °C for ten minutes, pressurizing it at 20 MPa for ten minutes, and cooling it. The unit of the content shown in Table 1 is parts by weight.

[Table 1]

|  | Example 1 | Example 2 | Example 3 | Example 4 (Not part of the invention) | Comparative example 1 | Comparative example 2 |
|---|---|---|---|---|---|---|
| Resin A | 30 | 50 | 60 | 70 | 80 | 100 |
| Resin B | 70 | 50 | 40 | 30 | 20 | 0 |
| - resin A: polypropylene resin<br>- resin B: heterophasic resin in which a propylene copolymer is dispersed in a polypropylene matrix | | | | | | |

2. Evaluation of physical properties

1) Evaluation of bendability

Each of the samples was prepared to have dimensions of 100 mm×100 mm×3 mm (=width×length×thickness), and Shore D hardness was measured by selecting three or more points on the samples.

Furthermore, each of the samples was prepared to have dimensions of 250 mm×250 mm×1 mm (=width×length×thickness), dumbbell samples were collected from the samples according to ASTM D638, and a modulus of elasticity of a point on each of the dumbbell samples at which elongation was 5% when stretched at a speed of 200 mm/min was measured to evaluate the flexibility and bendability of each of the samples.

**EP 3 544 026 B1**

Here, when the modulus of elasticity was 7 to 25 kgf/mm² and the Shore D hardness was 50 to 70, all mechanical properties and flexibility and bendability which are in a tradeoff relationship with the mechanical properties were evaluated to be excellent. That is, when the modulus of elasticity was less than 7 kgf/mm² and the Shore D hardness was less than 50, flexibility and bendability were high but mechanical strength greatly deteriorated. Thus, a cable maybe pressed during manufacture or installation and thus a structure thereof may deform and electrical characteristics thereof may deteriorate greatly. On the other hand, when the modulus of elasticity was greater than 25 kgf/mm² and the Shore D hardness was greater than 70, flexibility and bending property greatly deteriorated. 2) Evaluation of cold resistance.

Each of the samples was prepared to have dimensions of 250 mm×250 mm×2 mm (=width×length×thickness), and five small samples were prepared to have dimensions of 5.5 to 6.5mm×31 to 33 mm×2 mm (=width×length×thickness). The brittleness test (KS 3004) was conducted on the five small samples according to ASTM D746, i.e., the small samples were left at 23 °C and under relative humidity of 50% for forty hours or more and thereafter were left at each temperature for 2.5 to 3.5 minutes while reducing temperature by 5 °C, surfaces of the small samples were struck using a striking edge in a direction of an angle of 90 degrees and at a speed of 1800 to 2200 mm/s while fixed by a force of 0.56 N.m, and brittleness temperature $T_b$ was calculated by Equation 1 above by observing whether the small samples were destroyed or cracked.

[Table 2]

|  | Example 1 | Example 2 | Example 3 | Example 4 (Not part of the invention) | Comparative example 1 | Comparative example 2 |
|---|---|---|---|---|---|---|
| Shore D hardness | 54.2 | 63.3 | 66.9 | 69.3 | 71.4 | 75.6 |
| Elastic modulus (kgf/mm²) | 8.2 | 19.3 | 23.6 | 29.9 | 34.3 | 44.2 |
| brittleness temperature | -49.5 | -42.5 | -39.5 | -34.5 | -24.5 | -1.5 |

As shown in Table 2 above, the cold resistance, flexibility, bendability, etc. of each of examples 1 to 3 of the present invention were appropriate and thus the mechanical strength thereof was also sufficient, whereas the cold resistance of each of comparative examples 1 and 2 was very low due to the inappropriate base resin thereof and the flexibility and bendability thereof were very low.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

**Claims**

1.  A power cable comprising:

a conductor;
an inner semiconducting layer covering the conductor; and
an insulating layer covering the inner semiconducting layer,
wherein the insulating layer comprises, as a base resin, a non-cross-linked thermoplastic resin, which is a blended resin of a polypropylene resin A and a heterophasic resin B in which a propylene copolymer is dispersed in a polypropylene matrix, the content of the polypropylene resin A is 30 to 60 parts by weight and the content of the heterophasic resin B is 40 to 70 parts by weight, based on 100 parts by weight of the base resin,
the polypropylene resin A comprises a random propylene-ethylene copolymer containing an ethylene monomer in an amount of 1 to 10% by weight, based on a total weight of monomers, the polypropylene matrix contained in the heterophasic resin B comprises a propylene homopolymer, and the content of the propylene copolymer is 60 to 90 % by weight, based on a total weight of the heterophasic resin B, and
a brittleness temperature Tb is in a range of -55 to - 35 °C, the brittleness temperature Tb being defined by the

following Equation 1:

[Equation 1]

$$T_b = T_h + \Delta T [(S/100) - (1/2)],$$

wherein $T_h$ represents a temperature (°C) at which all five samples are destroyed or cracks observable with a naked eye occur on surfaces of the samples, when, according to ASTM D746, the five samples are left at 23 °C and under relative humidity of 50% for forty hours or more and thereafter are left at each temperature for 2.5 to 3.5 minutes while reducing a temperature by 5 °C and are struck using a striking edge at a speed of 1800 to 2200 mm/s in a direction of an angle of 90 degrees, the samples being manufactured to a thickness of 2 mm by preheating the base resin, for forming an insulating layer, at 180 °C for ten minutes, pressurizing the base resin at 20 MPa for ten minutes, and cooling the base resin,
$\Delta T$ is 5 °C, and
S represents the sum of percentages of samples destroyed at each temperature among all the samples.

2. The power cable of claim 1, wherein the polypropylene resin A satisfies all the following conditions a) to i) :

a) a density of 0.87 to 0.92 g/cm$^3$, measured according to ISO 11883;
b) a melting flow rate (MFR) of 1.7 to 1.9 g/10 min, measured at 230 °C and under a load of 2.16 kg, according to ISO 1133;
c) a tensile modulus of 930 to 980 MPa, measured at a tensile rate of 1 mm/min;
d) a tensile stress at yield of 22 to 27 MPa, measured at a tensile rate of 50 mm/min;
e) a tensile strain at yield of 13 to 15%, measured at a tensile rate of 50 mm/min;
f) Charpy impact strength of 1.8 to 2.1 kJ/m$^2$ at 0 °C and 5.5 to 6.5 kJ/m$^2$ at 23 °C;
g) a heat distortion temperature of 68 to 72 °C, measured at 0.45 MPa;
h) a Vicat softening point of 131 to 136 °C, measured at 50 °C/h and 10 N according to the A50 standard; and
i) Shore D hardness of 63 to 70, measured according to ISO 868.

3. The power cable of claim 1, wherein the heterophasic resin B satisfies all the following conditions a) to j):

a) a density of 0.86 to 0.90 g/cm$^3$, measured according to ISO 11883;
b) a melting flow rate (MFR) of 0.1 to 1.0 g/10 min, measured under a load of 2.16 kg and at 230 °C according to ISO 1133;
c) a tensile stress at break of 10 MPa or more, measured at a tensile rate of 50 mm/min;
d) a tensile strain at break of 13 to 15%, measured at a tensile rate of 50 mm/min;
e) bending strength of 95 to 105 MPa;
f) notched izod impact strength of 68 to 72 kJ/m$^2$ at - 40 °C;
g) a heat distortion temperature of 38 to 42 °C, measured at 0.45 MPa;
h) a Vicat softening point of 55 to 59 °C, measured at 50 °C/h and 10 N according to the standard A50;
i) Shore D hardness of 25 to 31, measured according to ISO 868; and
j) a melting point of 155 to 170 °C.

4. The power cable of claim 1, wherein the propylene copolymer contained in the heterophasic resin B comprises propylene-ethylene rubber (PER) particles containing an ethylene monomer in an amount of 20 to 50% by weight, based on a total weight of monomers, the PER particles having a particle size of 1 $\mu$m or less.

5. The power cable of claim 1, wherein the heterophasic resin B has a melting enthalpy of 25 to 40 J/g, measured by a differential scanning calorimeter (DSC).

6. The power cable of claim 1, wherein the insulating layer further comprises an insulating oil in an amount of 1 to 10 parts by weight, based on 100 parts by weight of the non-cross-linked thermoplastic polymer.

7. The power cable of claim 1, wherein the insulating layer further comprises at least one additive in an amount of 0.001 to 10% by weight, based on a total weight of the insulating layer, the at least one additive being selected from the group of an antioxidant, a buffering agent, a heat stabilizer, a nucleating agent, and acid scavengers.

8. The power cable of claim 1, wherein the non-cross-linked thermoplastic polymer has a melting point of 150 to 160 °C, measured by a differential scanning calorimeter (DSC), and a melting enthalpy of 30 to 80 J/g, measured by the DSC.

**Patentansprüche**

1. Stromkabel, umfassend:

    einen Leiter;
    eine den Leiter bedeckende innere Halbleiterschicht; und
    eine die innere Halbleiterschicht bedeckende Isolierschicht,
    wobei die Isolierschicht als Grundharz ein nicht vernetztes thermoplastisches Harz umfasst, bei dem es sich um ein Harzgemisch aus einem Polypropylen-Harz A und
    einem heterophasigen Harz B handelt, bei dem ein Propylen-Copolymer in einer Polypropylen-Matrix dispergiert ist, der Anteil des Polypropylen-Harzes A bezogen auf 100 Gewichtsteile des Grundharzes 30 bis 60 Gewichtsteile beträgt und der Anteil des heterophasigen Harzes B bezogen auf 100 Gewichtsteile des Grundharzes 40 bis 70 Gewichtsteile beträgt,
    das Polypropylen-Harz A ein zufälliges Propylen-Ethylen-Copolymer umfasst, das bezogen auf ein Monomer-Gesamtgewicht ein Ethylen-Monomer in einem Anteil von 1 bis 10 Gew.-% enthält, die in dem heterophasigen Harz B enthaltene Polypropylen-Matrix ein Propylen-Homopolymer umfasst und der Anteil des Propylen-Copolymers bezogen auf ein Gesamtgewicht des heterophasigen Harzes B 60 bis 90 Gew.-% beträgt und eine Sprödigkeitstemperatur Tb in einem Bereich von -55 bis -35 °C liegt, wobei die Sprödigkeitstemperatur Tb durch die folgende Gleichung 1 definiert ist:

    [Gleichung 1]

$$T_b = T_h + \Delta T\,[(S/100) - (1/2)],$$

    wobei $T_h$ für eine Temperatur (°C) steht, bei der alle fünf Proben zerstört werden oder mit dem blanken Auge sichtbare Risse an Oberflächen der Proben auftreten, wenn die fünf Proben gemäß ASTM D746 für 40 Stunden oder mehr einer Temperatur von 23 °C und einer relativen Luftfeuchtigkeit von 50 % ausgesetzt werden und anschließend jeder Temperatur für 2,5 bis 3,5 Minuten ausgesetzt werden, währen eine Temperatur um 5 °C reduziert wird, und mit einer Geschwindigkeit von 1800 bis 2200 mm/s in Richtung eines Winkels von 90 Grad mit einer Schlagkante beaufschlagt werden, wobei die Proben durch Vorerhitzen des Grundharzes zur Ausbildung einer Isolierschicht bei 180 °C für zehn Minuten, Druckbeaufschlagen des Grundharzes mit 20 MPa für 10 Minuten und Kühlen des Grundharzes in einer Dicke von 2 mm hergestellt sind,
    $\Delta T$ 5 °C beträgt, und
    S für die Summe der Anteile von bei jeder Temperatur zerstörten Proben aus allen Proben steht.

2. Stromkabel nach Anspruch 1, wobei das Polypropylen-Harz A alle folgenden Bedingungen a) bis i) erfüllt:

    a) eine nach ISO 11883 gemessene Dichte von 0,87 bis 0,92 g/cm$^3$;
    b) eine nach ISO 1133 bei 230 °C und unter einer Last von 2,16 kg gemessene Schmelze-Fließrate (MFR) von 1,7 bis 1,9 g/10 min;
    c) einen bei einer Zuggeschwindigkeit von 1 mm/min gemessenen Zugmodul von 930 bis 980 MPa;
    d) eine bei einer Zuggeschwindigkeit von 50 mm/min gemessene Streckspannung von 22 bis 27 MPa;
    e) eine bei einer Zuggeschwindigkeit von 50 mm/min gemessene Streckdehnung von 13 bis 15 %;
    f) eine Schlagzähigkeit nach Charpy von 1,8 bis 2,1 kJ/m$^2$ bei 0 °C und 5,5 bis 6,5 kJ/m$^2$ bei 23 °C;
    g) eine bei 0,45 MPa gemessene Wärmeformbeständigkeit von 68 bis 72 °C;
    h) einen gemäß der A50-Norm bei 50 °C/h und 10 N gemessenen Vicat-Erweichungspunkt von 131 bis 136 °C; und
    i) eine nach ISO 868 gemessene Shore-D-Härte von 63 bis 70.

**3.** Stromkabel nach Anspruch 1, wobei das heterophasige Harz B alle folgenden Bedingungen a) bis j) erfüllt:

a) eine nach ISO 11883 gemessene Dichte von 0,86 bis 0,90 g/cm$^3$;
b) eine nach ISO 1133 unter einer Last von 2,16 kg und bei 230 °C gemessene Schmelze-Fließrate (MFR) von 0,1 bis 1,0 g/10 min;
c) eine bei einer Zuggeschwindigkeit von 50 mm/min gemessene Bruchspannung von 10 MPa oder mehr;
d) eine bei einer Zuggeschwindigkeit von 50 mm/min gemessene Bruchdehnung von 13 bis 15 %;
e) eine Biegefestigkeit von 95 bis 105 MPa;
f) eine Izod-Kerbschlagzähigkeit von 68 bis 72 kJ/m$^2$ bei -40 °C;
g) eine bei 0,45 MPa gemessene Wärmeformbeständigkeit von 38 bis 42 °C;
h) einen gemäß der A50-Norm bei 50 °C/h und 10 N gemessenen Vicat-Erweichungspunkt von 55 bis 59 °C;
i) eine nach ISO 868 gemessene Shore-D-Härte von 25 bis 31; und
j) einen Schmelzpunkt von 155 bis 170 °C.

**4.** Stromkabel nach Anspruch 1, wobei das in dem heterophasigen Harz B enthaltene Propylen-Copolymer Propylen-Ethylen-Kautschuk-Partikel (PER-Partikel) umfasst, die bezogen auf ein Monomer-Gesamtgewicht ein Ethylen-Monomer in einem Anteil von 20 bis 50 Gew.-% enthalten, wobei die PER-Partikel eine Partikelgröße von 1 $\mu$m oder weniger aufweisen.

**5.** Stromkabel nach Anspruch 1, wobei das heterophasige Harz B eine mit einem dynamischen Differenzkalorimeter (DDK) gemessene Schmelzenthalpie von 25 bis 40 J/g aufweist.

**6.** Stromkabel nach Anspruch 1, wobei die Isolierschicht bezogen auf 100 Gewichtsteile des nicht vernetzten thermoplastischen Polymers des Weiteren ein Isolieröl in einem Anteil von 1 bis 10 Gewichtsteilen umfasst.

**7.** Stromkabel nach Anspruch 1, wobei die Isolierschicht bezogen auf ein Gesamtgewicht der Isolierschicht des Weiteren mindestens ein Additiv in einem Anteil von 0,001 bis 10 Gew.-% umfasst, wobei das mindestens eine Additiv aus der Gruppe aus einem Antioxidans, einem Puffermittel, einem Hitzestabilisator, einem Keimbildner und Säurefängern ausgewählt ist.

**8.** Stromkabel nach Anspruch 1, wobei das nicht vernetzte thermoplastische Polymer einen mit einem dynamischen Differenzkalorimeter (DDK) gemessenen Schmelzpunkt von 150 bis 160 °C und eine mit dem DDK gemessene Schmelzenthalpie von 30 bis 80 J/g aufweist.

**Revendications**

**1.** Câble d'alimentation comprenant :

un conducteur ;
une couche semi-conductrice intérieure couvrant le conducteur ; et
une couche isolante couvrant la couche semi-conductrice intérieure,
dans lequel la couche isolante comprend, comme résine de base, une résine thermoplastique non réticulée, qui est une résine mélangée d'une résine A de polypropylène et une résine B hétérophasique dans laquelle un copolymère de propylène est dispersé dans une matrice de polypropylène, la teneur de la résine A de polypropylène est de 30 à 60 parties en poids et la teneur de la résine B hétérophasique est de 40 à 70 parties en poids par rapport à 100 parties en poids de la résine de base,
la résine A de polypropylène comprend un copolymère propylène/éthylène aléatoire contenant une teneur en monomère d'éthylène de 1 à 10 % en poids par rapport à un poids total de monomères, la matrice de polypropylène contenue dans la résine B hétérophasique comprend un homopolymère de propylène et la teneur en copolymère de propylène est de 60 à 90 % en poids par rapport à un poids total de la résine B hétérophasique et une température de fragilité Tb est dans une gamme de -55 à -35 °C, la température de fragilité Tb étant définie par l'Equation 1 suivante :

[Equation 1]

$$T_b = T_h + \Delta T \left[ (S/100) - (1/2) \right],$$

dans laquelle $T_h$ représente une température (°C) à laquelle les cinq échantillons sont détruits ou des fissures visibles à l'oeil nu apparaissent sur des surfaces des échantillons lorsque, selon ASTM D746, les cinq échantillons sont soumis à 23 °C et une humidité relative de 50 % pour 40 heures ou plus et ensuite ils sont soumis à chaque température pour 2,5 à 3,5 minutes tant en réduisant une température de 5 °C et ils sont heurtés en utilisant un bord heurtant à une vitesse de 1800 à 2200 mm/s dans une direction d'un angle de 90 degrés, les échantillons étant fabriqués à une largeur de 2 mm en préchauffant la résine de base, afin de former une couche isolante, à 180 °C pour dix minutes, pressurisant la résine de base à 20 MPa pour dix minutes et refroidissant la résine de base,

$\Delta T$ est 5 °C et

S représente la somme de pourcentages d'échantillons détruits à chaque température parmi tous les échantillons.

2. Câble d'alimentation selon la revendication 1, dans lequel la résine A de polypropylène satisfait toutes les conditions a) à i) suivantes :

   a) une densité de 0,87 à 0,92 g/cm$^3$, mesurée selon ISO 11883 ;
   b) un indice de fluidité à chaud (IFC) de 1,7 à 1,9 g/10 min, mesuré à 230 °C et sous une charge de 2,16 kg, selon ISO 1133 ;
   c) un module de traction de 930 à 980 MPa, mesuré à une vitesse de traction de 1 mm/min ;
   d) une limite d'élasticité à la traction de 22 à 27 MPa, mesurée à une vitesse de traction de 50 mm/min ;
   e) un allongement à la limite d'élasticité de 13 à 15 %, mesuré à une vitesse de traction de 50 mm/min ;
   f) une résilience Charpy de 1,8 à 2,1 kJ/m$^2$ à 0 °C et de 5,5 à 6,5 kJ/m$^2$ à 23 °C ;
   g) une résistance à la déformation à chaud de 68 à 72 °C, mesurée à 0,45 MPa ;
   h) un point de ramollissement Vicat de 131 à 136 °C, mesuré à 50 °C/h et 10 N selon le standard A50 ; et
   i) une dureté Shore D de 63 à 70, mesurée selon ISO 868.

3. Câble d'alimentation selon la revendication 1, dans lequel la résine B hétérophasique satisfait toutes les conditions a) à j) suivantes :

   a) une densité de 0,86 à 0,90 g/cm$^3$, mesurée selon ISO 11883 ;
   b) un indice de fluidité à chaud (IFC) de 0,1 à 1,0 g/10 min, mesuré sous une charge de 2,16 kg et à 230 °C selon ISO 1133 ;
   c) une résistance à la rupture de 10 MPa ou plus, mesurée à une vitesse de traction de 50 mm/min ;
   d) un allongement à la rupture de 13 à 15 %, mesuré à une vitesse de traction de 50 mm/min ;
   e) une résistance à la flexion de 95 à 105 MPa ;
   f) une résistance au choc Izod entaillé de 68 à 72 kJ/m$^2$ à -40 °C ;
   g) une résistance à la déformation à chaud de 38 à 42 °C, mesurée à 0,45 MPa ;
   h) un point de ramollissement Vicat de 55 à 59 °C, mesuré à 50 °C/h et 10 N selon le standard A50 ;
   i) une dureté Shore D de 25 à 31, mesurée selon ISO 868 ; et
   j) un point de fusion de 155 à 170 °C.

4. Câble d'alimentation selon la revendication 1, dans lequel le copolymère de propylène contenu dans la résine B hétérophasique comprend des particules de caoutchouc de propylène-éthylène (PER) contenant une teneur en monomère d'éthylène de 20 à 50 % en poids par rapport à un poids total de monomères, les particules PER ayant une taille particulaire de 1 $\mu$m ou moins.

5. Câble d'alimentation selon la revendication 1, dans lequel la résine B hétérophasique a une enthalpie de fusion de 25 à 40 J/g, mesurée par un calorimètre différentiel à balayage (DSC).

6. Câble d'alimentation selon la revendication 1, dans lequel la couche isolante comprend en outre une teneur en huile isolant de 1 à 10 parties en poids par rapport à 100 parties en poids du polymère thermoplastique non réticulé.

7. Câble d'alimentation selon la revendication 1, dans lequel la couche isolante comprend en outre une teneur en au moins un additif de 0,001 à 10 % en poids par rapport à un poids total de la couche isolante, l'au moins un additif étant sélectionné dans le groupe d'un antioxydant, d'un agent tampon, d'un stabilisant chaleur, d'un agent de nucléation et des accepteurs d'acide.

8. Câble d'alimentation selon la revendication 1, dans lequel le polymère thermoplastique non réticulé a un point de fusion de 150 à 160 °C, mesuré par un calorimètre différentiel à balayage (DSC), et une enthalpie de fusion de 30 à 80 J/g, mesuré par le DSC.

EP 3 544 026 B1

Fig. 1

Fig. 2

16

**REFERENCES CITED IN THE DESCRIPTION**

**Patent documents cited in the description**

- KR 20140134836 A
- EP 3477662 A1
- WO 2014126404 A1